# NEUE EUROPÄISCHE PATENTSCHRIFT

(11) **EP 2 773 440 B2**
(45) Veröffentlichungstag und Bekanntmachung des Hinweises auf die Entscheidung über den Einspruch: **07.06.2023**
(45) Hinweis auf die Patenterteilung: 30.05.2018
(21) Anmeldenummer: 12775622.9
(22) Anmeldetag: 16.10.2012
(51) Int. Cl.: B01D 45/08, B01D 46/12, B01D 46/00, B05B 14/43

(54) **ANLAGE MIT EINER VORRICHTUNG ZUM ABSCHEIDEN VON OVERSPRAY**
PLANT HAVING A DEVICE FOR THE SEPARATION OF OVERSPRAY
INSTALLATION AVEC UN DISPOSITIF SERVANT À SÉPARER UN EXCÉDENT DE PULVÉRISATION

(30) Priorität: 03.11.2011 DE 102011117667
(43) Veröffentlichungstag der Anmeldung: 10.09.2014
(73) Patentinhaber: Eisenmann GmbH, 71032 Böblingen (DE)
(72) Erfinder: KATEFIDIS, Apostolos, 71116 Gärtringen (DE); RÖCKLE, Jürgen, 71106 Magstadt (DE)
(74) Vertreter: Ostertag & Partner Patentanwälte mbB
(86) Internationale Anmeldenummer: PCT/EP2012/004316
(87) Internationale Veröffentlichungsnummer: WO 2013/064212

(56) Entgegenhaltungen:
- EP-A1- 1 080 788
- WO-A1-2013/013780
- WO-A2-03/084638
- DE-A1- 2 236 396
- US-A- 1 946 744
- US-A- 4 895 083
- US-A1- 2008 314 248
- US-A1- 2010 050 870

## Beschreibung

Die Erfindung betrifft eine Anlage zum Beschichten, insbesondere zum Lackieren von Gegenständen, insbesondere von Fahrzeugkarosserien, gemäß dem Oberbegriff des Anspruchs 1.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray, Overspraypartikel oder Oversprayfeststoffe immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen bevorzugt Nassabscheidesysteme zum Einsatz.

Alternativ zur Nassabscheidung sind Filtermodule und Abscheidevorrichtungen der eingangs genannten Art vom Markt her bekannten, mittels denen auf trockenem Wege abgeschieden wird. Dabei haben sich wiederum insbesondere elektrostatisch arbeitende Abscheider etabliert, bei denen der Lack-Overspray an einer Abscheidefläche vorbeigeführt und dort abgeschieden wird, indem die Overspraypartikel durch eine Elektrodeneinrichtung ionisiert werden und auf Grund des zwischen der Abscheidefläche und der Elektrodeneinrichtung aufgebauten elektrischen Feldes zur Abscheidefläche wandern. Die an der Abscheidefläche haftenden Lack-Overspraypartikel können dann beispielsweise mechanisch von dieser abgestreift und abtransportiert werden.

Die Reinigungswirkung derartiger Abscheider ist zwar sehr hoch. Für einen kontinuierlichen Betrieb muss jedoch stets dafür gesorgt werden, dass sich zwischen der Abscheidefläche und der Elektrodeneinrichtung ein ausreichend starkes elektrisches Feld ausbilden kann, was nur bis zu einer gewissen Schichtdicke von Lack-Overspray auf der Abscheidefläche möglich ist, da eine solche Schicht isolierend wirkt. Die erforderliche kontinuierliche Entfernung des Lack-Oversprays von der Abscheidefläche kann jedoch mit baulich recht aufwendigen Maßnahmen verbunden sein. Es kann zudem vorkommen, dass Overspray an der Abscheidefläche derart reagiert, aushärtet oder trocknet, so dass dieser nicht mehr durch einfaches Abstreifen von der Abscheidefläche entfernt werden kann. Zudem ist der durch die hohe Abscheidewirkung gerechtfertigte Energieaufwand bei solchen Abscheidern nicht zu vernachlässigen.

Als Alternative zu den Elektroabscheidern haben sich am Markt auch Trockenabscheider für Overspray etabliert. Zum Beispiel gibt es Vliesfilter, bei denen die mit Overspray beladene Kabinenluft durch ein Vliesmaterial strömt, an dem sich der Overspray abscheidet. Allerdings setzt sich die Oberfläche von solchen Vliesfiltern insbesondere bei klebrigem Partikeln, wie sie bei Lack-Overspray vorliegen, rasch und irreversibel zu, so dass es zu einem Druckabfall bei der strömenden Luft kommt und keine ausreichende Abscheidung mehr gewährleistet ist. Solche Vliesfilter können auch als Sinterlamellenfilter ausgebildet und dazu ergänzend mit z.B. einem Steinmehl beschichtet sein; diese Schicht dient als Schutzschicht für das eigentliche Filtermaterial und kann dann periodisch abgereinigt werden. Teilweise werden hierzu jedoch sehr große Mengen an Steinmehl oder allgemein an Schichtmaterial benötigt.

Ein weiteres Beispiel für Trockenabscheider sind so genannte Trägheitsfilter, bei denen die durch einen Filter strömende Luft möglichst viele Richtungsänderungen erfährt, bei denen die Lackpartikel auf Grund ihrer Trägheit gegen angeströmte Flächen prallen und dort haften bleiben. Kleine und dadurch leichte Lackpartikel bleiben jedoch im Luftstrom, so dass die Abscheidewirkung solcher Trägheitsfilter begrenzt ist.

Anlagen mit Abscheidevorrichtungen zum Abscheiden von Stäuben ist beispielsweise aus der EP 1 080 788 A1 oder der US 1 946 744 A bekannt. Eine Luftreinigung mittels einer Nassabscheidung ist zum Beispiel in der DE 22 36 396 A1 beschrieben.

Aufgabe der vorliegenden Erfindung ist es daher, ein Filtermodul, eine Abscheidevorrichtung und eine Anlage der eingangs genannten Art zu schaffen, welche diesen Problemen Rechnung tragen.

Diese Aufgabe wird durch eine Anlage mit den Merkmalen des Anspruchs 1 gelöst.

Die Erfindung beruht auf der Erkenntnis, dass so die Aufnahmemenge eines Filtermoduls bei einem guten Abscheidegrad erreicht werden kann, da das Filtermodul zunächst als klassisches Abscheidefilter arbeitet, jedoch nach dem Prinzip eines Trägheitsfilters wirken kann, wenn die Abscheideelemente durch Overspray verschlossen sind. Die Hauptströmungsrichtung definiert in diesem die Durchtrittsrichtung der Kabinenluft durch das Filtermodul, beschreibt dann jedoch nicht mehr den Strömungsweg der Kabinenluft durch das Strömungslabyrinth. Dies wird weiter unten nochmals erläutert.

In der Praxis haben sich als Abscheideelemente Filterlamellen, Filterhülsen, Fachstrukturen oder Kammerstrukturen als günstig erwiesen.

Bei Filterlamellen können gute Abscheideergebnisse erzielt werden, wenn diese in Form von Abscheidematten ausgebildet sind.

Alternativ können die Filterlamellen mit einem V-förmigen oder bogenförmigen Querschnitt ausgebildet sein.

Die Abscheidewirkung in der Funktion des klassischen Abscheidefilters ist besonders gut, wenn das Abscheidematerial ein Vliesmaterial ist.

Das Filtermodul arbeitet besonders effektiv, wenn die Abscheideelemente in Filterstufen angeordnet sind, die in der Hauptströmungsrichtung aufeinander folgen.

Nachfolgend werden Ausführungsbeispiele der Erfindung anhand der Zeichnungen näher erläutert. In diesen zeigen:
- Figur 1: eine Lackierkabine einer Oberflächenbehandlungsanlage mit einer Abscheidevorrichtung für Overspray in einer Vorderansicht;
- Figur 2: einen Teilschnitt der Lackierkabine von Figur 1 entlang der dortigen Schnittlinie II-II;
- Figur 3: eine perspektivische Ansicht eines Filtermoduls der Abscheidevorrichtung, wobei ein Teil eines Filtergehäuses weggebrochen gezeigt ist;
- Figur 4: einen Horizontalschnitt des Filtermoduls, welche die Anordnung und Ausbildung mehrerer Abscheideelemente aus einem Vliesmaterial veranschaulicht;
- Figuren 5A und 5B: der Figur 4 entsprechende Horizontalschnitt, wobei abgewandelte Abscheideelemente vorhanden sind.

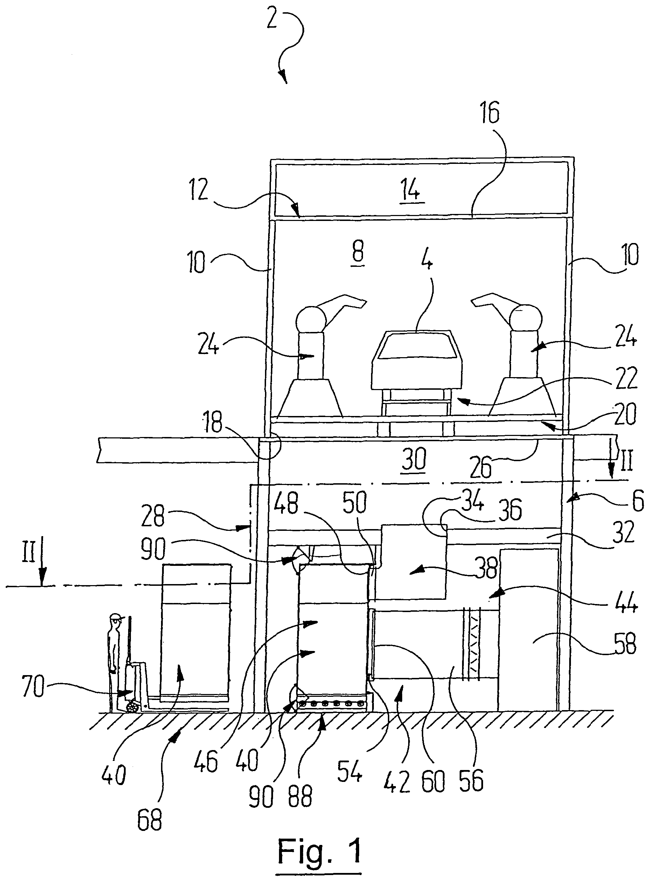

In Figur 1 ist mit 2 insgesamt eine Lackierkabine einer Oberflächenbehandlungsanlage bezeichnet, in welcher Fahrzeugkarosserien 4 lackiert werden, nachdem sie in der Lackierkabine 2 vorgelagerten, nicht eigens gezeigten Vorbehandlungsstationen z.B. gereinigt und entfettet wurden. Die Lackierkabine 2 ruht auf einem Stahlbau 6, wie es an und für sich bekannt ist.

Die Lackierkabine 2 umfasst einen oben angeordneten Lackiertunnel 8, welcher von vertikalen Seitenwänden 10 und einer horizontalen Kabinendecke 12 begrenzt, jedoch an den Stirnseiten offen ist. Darüber hinaus ist der Lackiertunnel 8 nach unten hin in der Weise offen, dass mit Overspray beladene Kabinenabluft nach unten strömen kann. Die Kabinendecke 12 ist in üblicher Weise als untere Begrenzung eines Luftzuführraumes 14 mit Filterdecke 16 ausgebildet.

Oberhalb einer unteren Öffnung 18 des Lackiertunnels 8 ist ein Stahlgerüst 20 angeordnet, welches eine an und für sich bekannte Fördertechnik 22 trägt, auf welches hier nicht näher eingegangen wird. Mit diesem können zu lackierende Fahrzeugkarosserien 4 von der Eingangsseite des Lackiertunnels 8 zu dessen Ausgangsseite transportiert werden. Im Inneren des Lackiertunnels 8 befinden sich Applikationseinrichtungen in Form von mehrachsigen Applikationsrobotern 24, wie sie an und für sich bekannt sind. Mittels der Applikationsroboter 24 können die Fahrzeugkarosserien 4 mit Lack beschichtet werden.

Die untere Öffnung 18 des Lackiertunnels 8 ist durch einen begehbaren Gitterrost 26 abgedeckt. Unterhalb der Gitterrostes 26 befindet sich ein Anlagenbereich 28, in welchem die von der Kabinenluft mitgeführten Overspraypartikel von der Kabinenluft getrennt werden.

Aus dem Luftzuführraum 14 strömt also Luft nach unten durch den Lackiertunnel 8 hindurch zu dem Anlagenbereich 28, wobei die Luft im Lackiertunnel 8 vorhandenen Lack-Overspray aufnimmt und mit sich führt.

Der Anlagenbereich 28 umfasst einen Strömungsbereich 30, in den die mit Overspray beladene Kabinenluft zunächst einströmt und welcher hierzu nach oben zur Lackierkabine 2 hin offen, jedoch zur Seite von den Seitenwänden 10 und nach unten durch eine Zwischendecke 32 begrenzt ist. Die Zwischendecke 32 weist in Kabinenlängsrichtung mehrere hintereinander angeordnete Durchgänge 34 auf. Jeder dieser Durchgänge 34 führt zu einem Kanaleinlass 36 eines jeweiligen Luftleitkanals 38, in den die mit Overspraypartikeln beladene Kabinenluft zunächst insgesamt vertikal nach unten einströmt.

Der Luftleitkanal 38 lenkt die Kabinenluft dann um 90° in die Horizontale um, worauf diese dann in insgesamt horizontaler Richtung in ein Filtermodul 40 einströmt. Jedes Filtermodul 40 bildet eine Abscheideeinheit, mit welcher eine insgesamt mit 42 bezeichnete Abscheidevorrichtung arbeitet, die in einem Abscheidebereich 44 der Lackierkabine 2 vorhanden ist, der unterhalb des Strömungsbereichs 30 angeordnet ist.

Jedes Filtermodul 40 ist lösbar mit einem der Luftleitkanäle 38 verbunden. Hierzu weist jedes Filtermodul 40 ein Filtergehäuse 46 mit einem Filtereinlass 48 auf, der komplementär zu einem Kanalauslassstutzen 50 des Luftleitkanals 38 ausgebildet ist, so dass das Filtermodul 40 durch eine entsprechende horizontalen Bewegung strömungstechnisch mit dem Kanalauslassstutzen 50 des Luftleitkanals 38 verbunden oder von diesem gelöst werden kann.

Die Abscheidevorrichtung 42 ist somit beim vorliegenden Ausführungsbeispiel ein aus den Filtermodulen 40 modular aufgebautes Abscheidefilter.

Die Kabinenluft wird in dem Filtermodul 40 noch zweimal um 90° umgelenkt, durchströmt dann eine Filtereinheit 52, an dem sich der Lack-Overspray abscheidet, und verlässt das Filtermodul 40 durch einen Filterauslassstutzen 54 auf derselben Seite des Filtergehäuses 46, auf der sich der Filtereinlass 48 befindet. Von dort strömt die nun weitgehend von Overspraypartikeln befreite Kabinenluft in einen Zwischenkanal 56, über den sie in einen Sammelströmungskanal 58 gelangt.

Der Zwischenkanal 56 weist einen Einlassflansch 60 auf, wobei der Filterauslassstutzen 54 des Filtermodul 40 durch dessen oben angesprochene horizontalen Bewegung strömungstechnisch mit diesem Einlassflansch 60 verbunden oder von diesem gelöst werden kann. Somit ist ein Filtermodul 40 in einer Betriebsstellung betriebsbereit, wenn sein Filtereinlass 48 mit dem Kanalauslassstutzen 50 des Luftleitkanals 38 und sein Filterauslassstutzen 54 mit dem Einlassflansch 60 des Zwischenkanals 56 verbunden ist.

Die Kabinenluft wird über den Sammelströmungskanal 58 einer weiteren Aufbereitung und Konditionierung zugeführt und im Anschluss daran in einem hier nicht eigens gezeigten Kreislauf wieder in den Luftzuführraum 14 geleitet, aus dem sie wieder von oben in den Lackiertunnel 8 einströmt. Falls die Kabinenluft durch das Abscheidefilter 42 noch nicht ausreichend von Overspraypartikeln befreit ist, können dem Abscheidefilter 42 noch weitere Filterstufen nachgelagert sein, denen die Kabinenluft zugeführt wird und in denen beispielsweise Vliesfilter oder auch elektrostatisch arbeitende Abscheidefilter eingesetzt werden, wie sie an und für sich bekannt sind. Gegebenenfalls können eine oder mehrere solcher weiteren Filterstufen auch in das Filtermodul 40 integriert sein. So kann beispielsweise vor dem Filterauslassstutzen 54 ein Filtervlies angeordnet sein.

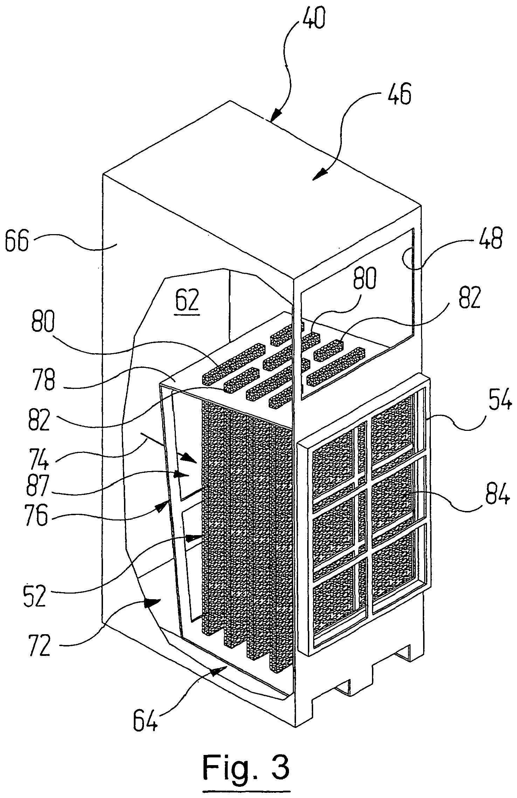

Anhand von Figur 3 wird nun eines der Filtermodule 40 näher erläutert. Wie dort zu erkennen ist, begrenzt das Filtergehäuse 46 des Filtermoduls 40 als Filterraum eine Strömungskammer 62, die sich zwischen dem Filtereinlass 48 und dem Filterauslassstutzen 54 erstreckt und von der Kabinenluft auf einem um 180° gekrümmten Strömungsweg durchströmt wird.

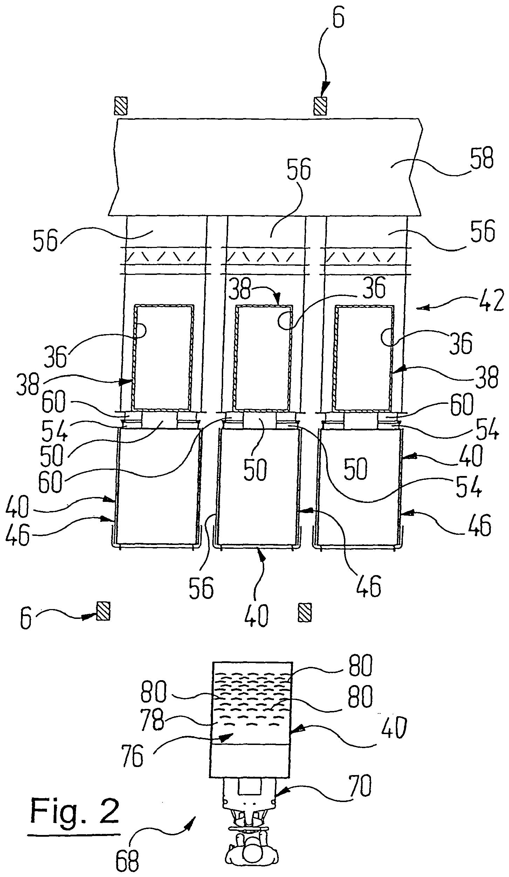

Das Filtergehäuse 46 seinerseits umfasst ein Bodenteil 64 und eine Kammerabdeckung 66, die von dem Bodenteil 64 getragen ist und bei welcher eine Kammerwand den Filtereinlass 48 und den Filterauslassstutzen 54 aufweist. Das Bodenteil 64 ist in seiner Geometrie und seinen Abmessungen als standardisierte Tragstruktur und beispielsweise nach Vorgabe einer so genannten Euro-Palette ausgebildet. Auf diese Weise kann ein Filtermodul 40 mit einem an solche Standardstrukturen angepassten Fördersystem 68 bewegt und in seine Betriebsstellung gebracht oder aus dieser entfernt werden. Dies ist in den Figuren 1 und 2 am Beispiel eines manuell von einer Bedienperson bedienbaren Förderhubwagens 70 angedeutet.

Die Anordnung der Filtermodule 40 in dem Abscheidebereich 44 der Lackierkabine 2 kann dementsprechend nach einem Raster erfolgen, welchen auf dem verwendeten standardisierten Bodenteil 64 beruht.

Zumindest ein unterer Sammelbereich des Filtermoduls 40 ist flüssigkeitsdicht und auf diese Weise als Sammelwanne 72 für Lack ausgebildet, der sich an die Filtereinheit 52 abscheidet und darin nach unten abfließt.

Die Filtereinheit 52 ist in dem Filterraum 62 so vor dem Filterauslassstutzen 54 angeordnet, dass sie in einer horizontalen Hauptströmungsrichtung 74 von der mit Overspray beladenen Kabinenluft durchströmt wird. Die Filtereinheit 52 umfasst eine Tragstruktur 76 mit einer weitgehend horizontalen Tragplatte 78 - wie in Figur 3 zu erkennen ist, ist die Tragplatte 78 hier in Strömungsrichtung der in das Filtermodul 40 eintretenden Kabinenluft gegenüber der Horizontalen leicht nach unten geneigt - die Innen an der Gehäusewand des Filtergehäuses 46 mit dem Filtereinlass 48 und dem Filterauslassstutzen 54 befestigt ist.

Die Tragplatte 78 trägt als Abscheideelemente eine Vielzahl von sich nach unten in Richtung auf die Sammelwanne 72 erstreckende Filterlamellen 80, von denen der Übersichtlichkeit halber nur einige mit einem Bezugszeichen versehen sind. Dies kann wie beim vorliegenden Ausführungsbeispiel z.B. in der Weise erfolgen, dass die Tragplatte 78 zu den Filterlamellen 80 komplementäre Schlitze 82 aufweist, in welche die Filterlamellen 80 eingesteckt sind. Auch von den Schlitzen 82 tragen nur einige ein Bezugszeichen.

Die Abscheideelemente, d.h. vorliegend die Filterlamellen 80, sind aus einem für die Kabinenluft durchlässigen Abscheidematerial gebildet. Beim hier beschriebenen Ausführungsbeispiel sind die Abscheideelemente als Abscheidematten in Form von Fasermatten 84 aus einem Fasermaterial ausgebildet, wie es an und für sich bekannt ist. In der Praxis hat sich ein Vliesmaterial bewährt, wie es z.B. bei am Markt befindlichen Filtern in Form von Vliesmatten verwendet wird.

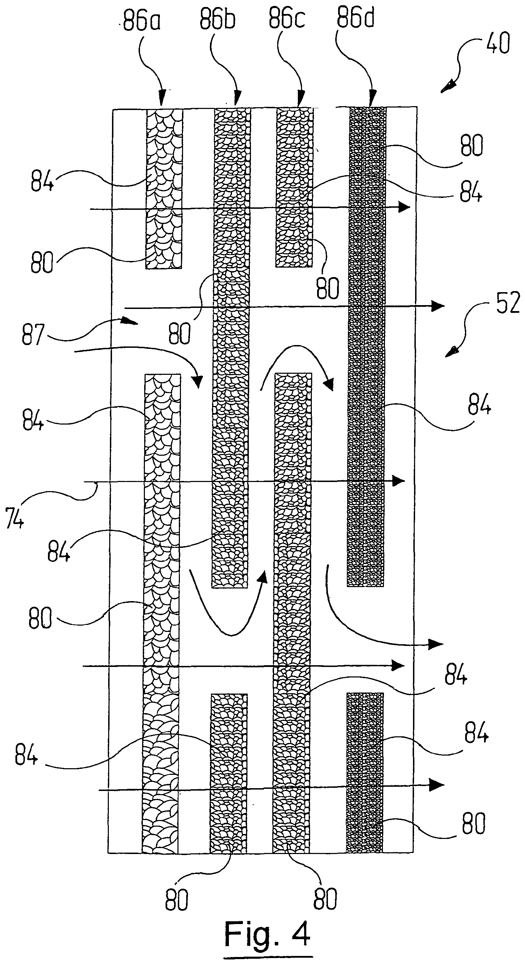

Beim in den Figuren 3 und 4 gezeigten Ausführungsbeispiel sind die Fasermatten 84 quer zur Strömungsrichtung 74 der Luft angeordnet. Dabei nimmt die Materialdichte, d.h. die Faserdichte, des für die jeweiligen Filterlamellen 80 verwendeten Fasermaterials bei den Fasermatten 84 in Strömungsrichtung 74 zu. Dies ist in Figur 4 durch eine dichtere Faserstruktur bei den einzelnen Fasermatten 84 veranschaulicht, die in Strömungsrichtung 74 in aufeinander folgenden Filterstufen 86a bis 86d angeordnet sind. Es können auch mehr oder weniger als vier Filterstufen vorgesehen sein.

In der Filtereinheit 52 ist ein von der Kabinenluft durchströmbares Strömungslabyrinth 87 ausgebildet. Hierzu sind beim vorliegenden Ausführungsbeispiel die einzelnen Filterlamellen 80 in Strömungsrichtung 74 und in jeder Filterstufe 86a bis 86d voneinander beabstandet und zudem versetzt zueinander angeordnet.

Das Filtermodul 40 funktioniert nun wie folgt:
Als Ausgangssituation wird zunächst ein unbeladenes, frisches Filtermodul 40 betrachtet. Wenn nun mit Overspray beladene Kabinenluft in die Filtereinheit 52 eintritt, durchströmt diese Kabinenluft in der Hauptströmungsrichtung 74 die Fasermatten 84, an denen sich dann Overspray abscheidet.

Dabei scheidet sich zunächst der größte Anteil an Overspray an den Fasermatten 84 in der ersten Filterstufe 86a ab, die zuerst von der Kabinenluft durchströmt werden und die geringste Materialdichte aufweisen.

Im Laufe der Zeit nehmen die Fasermatten 84 in den einzelnen Filterstufen 86, 86b, 86c und 86d sukzessive so viel Overspray auf, dass sie für die Kabinenluft undurchlässig werden. Dabei setzten sich in der Regel zuerst die Fasermatten 84 in der ersten Filterstufe 86a und dann nacheinander die Fasermatten 84 in der zweiten, dritten und vierten Filterstufe 86b, 86c und 86d zu. Die Kabinenluft tritt dann zunächst nicht mehr durch die jeweiligen Fasermatten 84 in der ersten Filterstufe 86a hindurch, sondern strömt durch den Zwischenraum zwischen den Fasermatten 84 der ersten Filterstufe 86a in das Strömungslabyrinth 87 ein. Gegebenenfalls können sich auch die Filtermatten 84 der vierten Filterstufe 86d zuerst zusetzen, gefolgt von den Filtermatten 84 der dritten, zweiten und ersten Filterstufe 86c, 86b und 86a. Dies hängt von der Materialdichte der einzeln Filtermatten 84 ab.

Wenn die mit Overspray beladene Kabinenluft auf eine undurchlässige Fasermatte 84 trifft, wird die Kabinenluft durch diese Fasermatte 84 umgelenkt und kann durch den nächsten Durchgang zwischen zwei Fasermatten 84 einer Filterstufe 86a, 86b, 86c oder 86d weiterströmen. Dies ist in Figur 4 durch die gekrümmten Pfeile verdeutlicht.

Wenn also Fasermatten 84 einer Filterstufe 86a, 86b, 86c oder 86d für die Kabinenluft undurchlässig geworden sind, arbeitet das Filtermodul 40 auf diese Weise nach Art eines Trägheitsfilters, in dem die Overspraypartikel sich in an und für sich bekannter Weise nach dem Prinzip der Massenträgheit an den nicht mehr durchlässigen Filterlamellen 80 abscheiden, wenn die strömende Kabinenluft eine Richtungsänderung erfährt. Gegebenenfalls können Mittel wie z.B. Schieber vorhanden sein, mit denen der Durchgang durch das Strömungslabyrinth 87 blockiert werden kann, so dass das Filtermodul 40 über einen gewissen Zeitraum als reines Vliesfilter arbeiten kann.

Von den Fasermatten 84 fließt der Overspray nach unten in die Sammelwanne 72, wo sich der Overspray zu einem Lacksumpf ansammelt.

Wie in Figur 1 zu erkennen ist, ruht das Filtermodul 40 in seiner Betriebsstellung auf einer Waage 90 und ist mittels einer Verriegelungseinrichtung 90 oben und unten in seiner Betriebsstellung arretiert.

Jedes Filtermodul 40 ist für die Aufnahme einer maximalen Lackmenge, d.h. für eine Grenzbeladung mit Overspray, ausgelegt, die von der Bauart des Filtermoduls 40 und den verwendeten Materialien hierfür abhängt. Die bereits aufgenommene Lackmenge kann über die Waage 88 überwacht werden. Alternativ kann die Grenzbeladung mittels einer Differenzdruckbestimmung ermittelt werden. Je größer die Beladung des Filtermoduls 40 ist, desto größer ist der durch das Filtermodul 40 aufgebaute Luftwiderstand.

Wenn ein Filtermodul 40 seine maximale Aufnahmekapazität erreicht, wird die Verriegelungseinrichtung 90 gelöst, das voll beladene Filtermodul 40 aus dem Abscheidebereich 44 der Lackierkabine 2 mit dem Hubförderer 70 herausgefahren und gegen ein leeres Filtermodul 40 ausgetauscht. Zuvor wird dazu die Strömungsverbindung des auszutauschenden Filtermoduls 40 mit dem Leitkanal 38 und dem Verbindungskanal 56 unterbrochen, indem der Kanalauslassstutzen 50 des Leitkanals 38 und der Einlassflansch 60 des Verbindungskanals 56 mittels nicht eigens gezeigter Sperrschieber verschlossen werden.

Wenn das leere Filtermodul 40 in seine Betriebsstellung auf die Waage 88 gefahren ist, wird es entsprechend mit der Verriegelungseinrichtung 90 arretiert und so gegen ein unbeabsichtigtes Herausfahren aus dem Abscheidebereich 44 gesichert. Die Sperrschieber des Leitkanals 38 und des Verbindungskanals 56 werden wieder in eine Offenstellung gebracht, so dass das neu positionierte Filtermodul 40 von der Kabinenluft durchströmt wird.

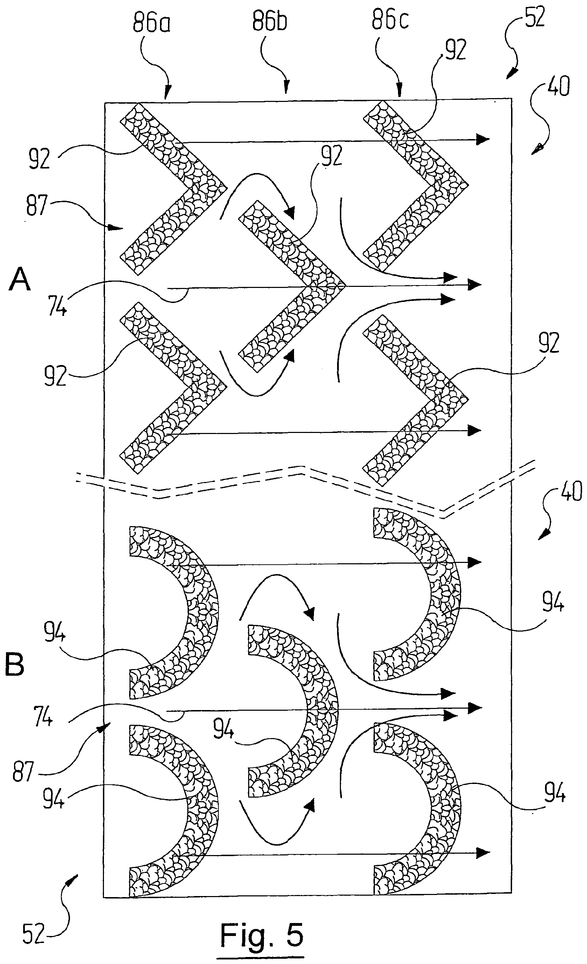

Anstelle der Fasermatten 84 können auch in ihrer Geometrie und Abmessung anders ausgebildete Abscheideelemente verwendet werden. Die Figuren 5A und 5B zeigen jeweils ein abgewandeltes Filtermodul 40. In Figur 5A sind Filterlamellen 92 gezeigt, die im Querschnitt v-förmig sind, in Figur 5B sind Filterlamellen 94 zu erkennen, die im Querschnitt bogenförmig sind.

Statt der Filterlamellen 80, 92 oder 94 können als Abscheideelemente auch Fachstrukturen oder Kammerstrukturen vorgesehen sein. Als Fachstrukturen können beispielsweise falt- oder steckbar miteinander verbundene Lamellen oder Platten dienen. Kammerstrukturen werden in der Praxis nach Art von Waben aufgebaut.

Im Hinblick auf die Aufbereitung oder Entsorgung des Filtermoduls 40 können eine Komponente, mehrere Komponenten oder alle Komponenten des Filtermoduls 40 aus einem nassfesten Recyclingmaterial gefertigt sein.

Als nassfestes Recyclingmaterial kommen beispielsweise Papier- und Pappmaterialien, Wellkarton, Kartone mit stehender Welle, Kartone mit Wabenstruktur oder Wickelkartone, MDF-Material oder Holz in Betracht. Auch Kunststoffe wie insbesondere Polyethylen oder Polypropylen sind geeignet.

Das Filtermodul 40 kann darüber hinaus als solches als modularer Bausatz ausgebildet sein. In diesem Fall kann ein Filtermodul vor Ort aufgebaut werden und kann Platz sparend, z.B. zusammengefaltet, zum Ort seiner Verwendung transportiert werden.

## Patentansprüche

1. Anlage zum Beschichten, insbesondere zum Lackieren von Gegenständen, insbesondere von Fahrzeugkarosserien, mit
a) einer Beschichtungskabine (2), in welcher die Gegenstände (4) mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung (42), welcher diese Kabinenluft zuführbar ist und wo ein Großteil zumindest der Feststoffe aus dem Overspray abgeschieden wird, mit wenigstens einem Filtermodul (40), durch welches mit Overspray beladene Kabinenluft leitbar ist und in dem sich Overspray abscheidet;
wobei
c) das Filtermodul (40) ein Filtergehäuse (46) aufweist, welches einen Filterraum (62) begrenzt, durch welchen mit Overspray beladene Kabinenluft in einer Hauptströmungsrichtung (74) leitbar ist,
**dadurch gekennzeichnet, dass**
d) in dem Filterraum (62) eine Vielzahl von Abscheideelementen (80; 92; 94) aus einem für die Kabinenluft durchlässigen Abscheidematerial derart angeordnet ist, dass zwischen den Abscheideelementen (80; 92; 94) ein Strömungslabyrinth (87) ausgebildet ist;
e) das Abscheidematerial ein Fasermaterial ist;
f) die Abscheideelemente in Filterstufen (86a, 86b, 86c, 86d) angeordnet sind, die in der Hauptströmungsrichtung (74) aufeinander folgen;
g) die Materialdichte der Abscheidelemente (80; 92; 94) in den Filterstufen (86a, 86b, 86c, 86d) in der Hauptströmungsrichtung (74) zunimmt.

2. Anlage nach Anspruch 1, **dadurch gekennzeichnet, dass** als Abscheideelemente Filterlamellen (80; 92; 94), Filterhülsen, Fachstrukturen oder Kammerstrukturen vorhanden sind.

3. Anlage nach Anspruch 2, **dadurch gekennzeichnet, dass** die Abscheideelemente als Filterlamellen (80) in Form von Abscheidematten (84) ausgebildet sind.

4. Anlage nach Anspruch 2, **dadurch gekennzeichnet, dass** die Abscheideelemente als Filterlamellen (92; 94) mit einem V-förmigen oder bogenförmigen Querschnitt ausgebildet sind.

5. Anlage nach einem der Ansprüche 1 bis 4, **dadurch gekennzeichnet, dass** das Abscheidematerial ein Vliesmaterial ist..

## Claims

1. Plant for coating, in particular painting articles, in particular vehicle bodies, having
a) a coating booth (2), in which coating material can be applied to the articles (4) and through which can be conducted an air flow which takes up and carries off resulting overspray of the coating material;
b) a separation device (42), to which this booth air can be supplied and where a large part of at least the solids is separated from the overspray, having at least one filter module (40) through which overspray-laden booth air can be conducted and in which overspray is deposited;
wherein
c) the filter module (40) comprises a filter housing (46) that delimits a filter space (62) through which overspray-laden booth air can be conducted in a main flow direction (74),
**characterised in that**
d) a multiplicity of separation elements (80; 92; 94) composed of a separation material which is permeable to the booth air are arranged in the filter space (62) such that a flow labyrinth (87) is formed between the separation elements (80; 92; 94);
e) the separation material is a fibre material;
f) the separation elements are arranged in filter stages (86a, 86b, 86c, 86d) which follow one another in the main flow direction (74);
g) the material density of the separation elements (80; 92; 94) in the filter stages (86a, 86b, 86c, 86d) increases in the main flow direction (74).

2. Plant according to Claim 1, **characterised in that** filter lamellae (80; 92; 94), filter sleeves, compartmented structures or chambered structures are present as separation elements.

3. Plant according to Claim 2, **characterised in that** the separation elements are formed as filter lamellae (80) in the form of separation mats (84).

4. Plant according to Claim 2, **characterised in that** the separation elements are formed as filter lamellae (92; 94) with a V-shaped or arcuate cross-section.

5. Plant according to one of Claims 1 to 4, **characterised in that** the separation material is a nonwoven material.

## Revendications

1. Installation dévolue au revêtement, en particulier au laquage d'objets et notamment de carrosseries de véhicules, comprenant
a) une cabine de revêtement (2) dans laquelle les objets (4) peuvent être sollicités par du matériau de revêtement, et à travers laquelle peut être guidé un courant d'air qui reçoit et évacue un excédent de pulvérisation dudit matériau de revêtement ;
b) un dispositif de séparation (42) auquel cet air de cabine peut être délivré et dans lequel au moins une majeure partie des matières solides est séparée d'avec l'excédent de pulvérisation, comportant au moins un module de filtration (40) à travers lequel de l'air de cabine chargé d'excédent de pulvérisation peut être guidé, et dans lequel de l'excédent de pulvérisation se dissocie ;
sachant que
c) ledit module de filtration (40) comprenant un boîtier de filtre (46) qui délimite une chambre de filtration (62) à travers laquelle de l'air de cabine, chargé d'excédent de pulvérisation, peut être guidé dans une direction d'écoulement principal (74),
**caractérisée par le fait**
d) **qu'**une multiplicité d'éléments séparateurs (80 ; 92 ; 94), constitués d'un matériau de dissociation perméable à l'air de cabine, est logée dans la chambre de filtration (62) de manière à donner naissance à un labyrinthe d'écoulement (87), entre lesdits éléments séparateurs (80 ; 92 ; 94) ;
e) **que** ledit matériau de dissociation est un matériau fibreux ;
f) les éléments séparateurs sont agencés en des étages de filtration (86a, 86b, 86c, 86d) qui se succèdent mutuellement dans la direction d'écoulement principal (74)
g) **que** la densité du matériau desdits éléments séparateurs (80 ; 92 ; 94) croît dans les étages de filtration (86a, 86b, 86c, 86d), dans la direction d'écoulement principal (74).

2. Installation selon la revendication 1, **caractérisée par le fait que** des lamelles de filtration (80 ; 92 ; 94), des douilles de filtration, des structures alvéolaires ou des structures compartimentées sont présentes en tant qu'éléments séparateurs.

3. Installation selon la revendication 2, **caractérisée par le fait que** les éléments séparateurs sont réalisés en tant que lamelles de filtration (80) revêtant la forme de nappes séparatrices (84).

4. Installation selon la revendication 2, **caractérisée par le fait que** les éléments séparateurs sont réalisés en tant que lamelles de filtration (92 ; 94) munies d'une section transversale configurée en V, ou en arc de cercle.

5. Installation selon l'une des revendications 1 à 4, **caractérisée par le fait que** le matériau de dissociation est un non-tissé.
